# EUROPÄISCHE PATENTANMELDUNG

(11) **EP 3 912 871 A1**
(43) Veröffentlichungstag der Anmeldung: **24.11.2021**
(21) Anmeldenummer: 21173907.3
(22) Anmeldetag: 14.05.2021
(51) Int. Cl.: B60T 7/20, F16D 66/00

(54) **ANHÄNGERSTABILISIERUNGSEINRICHTUNG UND VERFAHREN ZUR STABILISIERUNG EINES ANHÄNGERS**

(30) Priorität: 19.05.2020 DE 102020113509
(71) Anmelder: Reich GmbH Regel- und Sicherheitstechnik, 35713 Eschenburg-Wissenbach (DE); Knott GmbH, D-83125 Eggstätt (DE)
(72) Erfinder: BENDER, Steffen, 35713 Eschenburg (DE); KNEIFEL, Jan Kevin, 35686 Dillenburg (DE); MERTINKO, Christian, 83349 Palling (DE); STRASSER, Josef, 83257 Gstadt am Chiemsee (DE); SCHAURER, Oliver, 85445 Oberding (DE)
(74) Vertreter: Hofstetter, Schurack & Partner

(57) **Zusammenfassung**

Die vorliegende Erfindung betrifft eine Anhängerstabilisierungseinrichtung (24) für einen Anhänger umfassend mindestens eine Drehzahlerfassungseinrichtung (26) zur Ermittlung der Drehzahl von mindestens einem Anhängerrad (20, 22), wobei die Drehzahlerfassungseinrichtung (26) mindestens zwei Permanentmagnete (42) als Impulsgeber einer Impulserfassungseinrichtung (44) aufweist und die Permanentmagnete (42) an einem rotierenden Element einer Anhängerbremse und/oder einer Felge (38) des Anhängerrads (20, 22) und/oder an mindestens einem Träger (40) angeordnet sind, wobei der Träger (40) zwischen dem rotierenden Element der Anhängerbremse und der Felge (38) des Anhängerrads (20, 22) angeordnet ist, und mindestens eine mit der Impulserfassungsvorrichtung (44) verbundene elektronische Steuereinrichtung (30) zur Steuerung von wenigstens einem Bremsaktuator (28) zur Regulierung der Drehzahl des Anhängerrads (20, 22) mittels einer auf das mindestens eine Anhängerrad (20, 22) wirkenden Bremseinrichtung (58), wobei die Steuereinrichtung (30) den Bremsaktuator (28) in Abhängigkeit der erfassten Drehzahlen des mindestens einen Anhängerrads (20, 22) steuert. Die Erfindung betrifft zudem ein Verfahren zur Stabilisierung und Regulierung des Fahrzustands eines Anhängers.

## Beschreibung

Die Erfindung betrifft eine Anhängerstabilisierungseinrichtung für einen Anhänger, insbesondere für einen Wohnwagen, einen Caravan, einen Bootsanhänger, einen Verkaufswagen, einen Transportanhänger oder einen Autotransportanhänger. Ferner betrifft die Erfindung ein Verfahren zur Stabilisierung und Regulierung des Fahrzustands eines Anhängers, insbesondere eines Wohnwagens, eines Caravans, eines Bootsanhängers, eines Verkaufswagens, eines Transportanhängers oder eines Autotransportanhängers.

Derartige Anhängerstabilisierungseinrichtungen für Anhänger und derartige Anhänger mit solchen Anhängerstabilisierungseinrichtungen sind aus dem allgemeinen Stand der Technik bereits hinlänglich bekannt. Der Anhänger ist beispielsweise als ein Wohnwagen, ein Caravan, ein Bootsanhänger, ein Verkaufswagen, ein Transportanhänger oder ein Autotransportanhänger, insbesondere jeweils für einen Personenkraftwagen als Zugfahrzeug, ausgebildet. Die Anhängerstabilisierungseinrichtung umfasst dabei wenigstens einen Aktuator, mittels welchem unter Betreiben des Aktuators eine Fahrt des Anhängers stabilisiert werden kann. Darunter ist insbesondere zu verstehen, dass mittels des Aktuators unerwünschten Bewegungen des Anhängers entgegengewirkt, insbesondere aktiv entgegengewirkt, werden kann, indem der Aktuator betrieben wird. Hierdurch kann beispielsweise ein gewünschter Zustand, insbesondere ein gewünschter Fahrzustand, des Anhängers herbeigeführt werden. Insbesondere können mittels der Anhängerstabilisierungseinrichtung unerwünschte beziehungsweise übermäßige Aufbaubewegungen des Anhängers relativ zu einer Fahrbahn, entlang welcher der Anhänger fährt, vermieden beziehungsweise solchen unerwünschten Aufbaubewegungen entgegengewirkt werden.

Insbesondere bei Last- oder Transportanhängern besteht eine große Differenz zwischen Leergewicht und zulässigem Gesamtgewicht. Dieses Verhältnis beträgt üblicherweise 1:4 oder mehr. Bekannte Stabilisierungssysteme für auflaufgebremste Anhänger greifen mit konstanter Kraft (abgestimmt auf das Leergewicht) in das Bremssystem ein. Daher erlauben diese Systeme nur eine sehr geringe Spreizung der Gewichtsverhältnisse am Anhänger von typischerweise 1:1,4 um ein ungewolltes Blockieren der Räder beim Stabilisierungseingriff zu vermeiden. Eine Schlingerbewegung am Anhänger bedeutet, dass an den Anhängerräder seitliche Führungskräfte auf die Fahrbahn übertragen werden müssen. Wird nun das Anhängerrad zu stark abgebremst, so wird der sichere Bereich des sogenannten Kamm'schen Kreises verlassen und das Rad blockiert. Ein blockierendes Rad kann keine Seitenführungskräfte mehr übertragen. Um auch bei den bekannten Stabilisierungssystemen ein ungewolltes Blockieren der Anhängerräder auch bei ungünstigen Reibwerten der Fahrbahn, z.B. bei festgefahrenen Schnee oder nassem geschliffenen Beton zu verhindert, dürfen diese bekannten Systeme keine Bremskräfte von mehr als 30% am Anhängerrad im Zustand mit geringst möglicher Achslast aufbringen. Damit sind derartige bekannte Stabilisierungssysteme nur für solche auflaufgebremste Anhänger geeignet, bei denen die Differenz zwischen Leergewicht und zulässigen Gesamtgewicht relativ klein ist, wie z.B. Wohnwägen oder Anhänger mit festen Aufbauten. Auch sind die geschilderten Fahrbahnzustände eher selten, so dass durch die Beschränkung der Bremskraft Potential für eine wirkungsvolle Stabilisierung des schlingernden Anhängers verschenkt wird.

Beispiele für Anhängerstabilisierungseinrichtungen der hier betrachteten Art sind aus der DE 20 2016 104 675 U1, die eine Zusatzbremseinrichtung für einen auflaufgebremsten Fahrzeuganhänger offenbart oder der DE 20 2015 106 595 U1, die eine Stabilisierungstechnik für Fahrzeuganhänger zeigt, zu entnehmen. Aus der DE 10 2012 016 234 A1 ist ein Anhänger für ein Fahrzeug bekannt. Die US 2018/0086227 A1 offenbart eine Vorrichtung mit einem gezogenen Fahrzeug zur Verwendung in Kombination mit einem Zugfahrzeug. Der US 2008/0169144 A1 ist ein regeneratives Bremssystem für ein gezogenes Fahrzeug als bekannt zu entnehmen. Die GB 2 409 712 A offenbart ein Anti-Schlinger-Bremssystem für einen Anhänger. Aus der EP 1 598 249 A1 ist eine Schlingerbremse für Fahrzeuganhänger bekannt.

Aufgabe der vorliegenden Erfindung ist es, eine Anhängerstabilisierungseinrichtung und ein Verfahren zur Stabilisierung und Regulierung des Fahrzustands eines Anhängers derart weiterzuentwickeln, dass die den Fahrzustand des Anhängers sicher und eindeutig erkennen und identifizieren und zudem einen besonders sicheren Betrieb des Anhängers gewährleisten.

Diese Aufgabe wird erfindungsgemäß durch eine Anhängerstabilisierungseinrichtung mit den Merkmalen des Anspruchs 1, durch ein Verfahren gemäß den Merkmalen des Anspruchs 14 sowie einen Anhänger mit den Merkmalen des Anspruchs 21 und ein Computerprogramm mit den Merkmalen des Anspruchs 20 gelöst. Vorteilhafte Ausgestaltungen mit zweckmäßigen Weiterbildungen der Erfindung sind in den jeweiligen Unteransprüchen angegeben, wobei vorteilhafte Ausgestaltungen jedes Erfindungsaspekts als vorteilhafte Ausgestaltungen der jeweils anderen Erfindungsaspekte anzusehen sind.

Ein erster Aspekt der Erfindung betrifft eine Anhängerstabilisierungseinrichtung für einen Anhänger, insbesondere für einen Wohnwagen, einen Caravan, einen Bootsanhänger, einen Verkaufswagen, einen Transportanhänger oder einen Autotransportanhänger. Die erfindungsgemäße Anhängerstabilisierungseinrichtung umfasst dabei mindestens eine Drehzahlerfassungseinrichtung zur Ermittlung der Drehzahl von mindestens einem Anhängerrad, wobei die Drehzahlerfassungseinrichtung mindestens zwei Permanentmagnete als Impulsgeber einer Impulserfassungseinrichtung aufweist und die Permanentmagnete an einem rotierenden Element einer Anhängerbremse und/oder einer Felge des Anhängerrads und/oder an mindestens einem Träger angeordnet sind, wobei der Träger zwischen dem rotierenden Element der Anhängerbremse und der Felge des Anhängerrads angeordnet ist. Zudem umfasst die erfindungsgemäße Anhängerstabilisierungseinrichtung mindestens eine mit der Impulserfassungsvorrichtung verbundene elektronische Steuereinrichtung zur Steuerung von wenigstens einem Bremsaktuator zur Regulierung der Drehzahl des Anhängerrads mittels einer auf das mindestens eine Anhängerrad wirkende Bremseinrichtung, wobei die Steuereinrichtung den Bremsaktuator in Abhängigkeit der erfassten Drehzahlen des mindestens einen Anhängerrads steuert. Vorteilhafterweise ist durch die erfindungsgemäße Anhängerstabilisierungseinrichtung gewährleistet, dass der Fahrzustand des Anhängers sicher und eindeutig erkannt und identifiziert wird. Zudem ist ein besonders sicherer Betrieb des Anhängers gewährleistet, da durch die aktuelle Drehzahlerfassung des wenigstens einen Anhängerrads mittels der Drehzahlerfassungseinrichtung fortwährend ein aktueller Fahrzustand des Anhängers überprüft werden kann. Insbesondere ist es anhand der aktuellen Drehzahlen der geregelten und/oder ungeregelten Anhängerräder möglich, dass die Steuereinrichtung den Bremsaktuator derart steuert, dass ein Blockieren der Anhängerräder während der Steuerung und Regelung der Drehzahl des mindestens einen Anhängerrads vermieden wird. Die Auswertung der Raddrehzahl zur Blockierverhinderung im Zusammenhang mit dem stabilisierenden Bremseingriff ermöglicht es, dass der Stabilisierungseingriff über die Steuereinrichtung und den Bremsaktuator gezielt bis an die Kraftschlussgrenze der Anhängerräder geführt werden kann. Vorteilhafterweise müssen daher weitere Faktoren, wie zum Beispiel der Kraftschlussbeiwert Reifen-Straße oder auch die aktuelle Radaufstandskraft, nicht berücksichtigt werden. Die erfindungsgemäße Anhängerstabilisierungseinrichtung ermöglicht daher eine sichere und auch funktionell einfache Stabilisierung des Anhängers während der Fahrt. Dies gilt insbesondere auch für Last- und Transportanhänger, bei denen eine große Differenz zwischen dem Leergewicht und ihrem zulässigen Gesamtgewicht besteht. Bei dem rotierenden Element der Anhängerbremse kann es sich beispielsweise um eine Bremsnabe, eine Bremstrommel, eine Bremsscheibe oder einen Bremsscheibenträger handeln.

In einer vorteilhaften Ausgestaltung der erfindungsgemäßen Anhängerstabilisierungseinrichtung umfasst die Impulserfassungseinrichtung mindestens einen Magnetfeldsensor an dem die Permanentmagnete vorbeigeführt werden. Der Magnetfeldsensor ist in üblicher Art und Weise mit der Steuereinrichtung verbunden, die empfangenen Drehzahldaten dann entsprechend auswertet und verarbeitet.

In weiteren vorteilhaften Ausgestaltungen der erfindungsgemäßen Anhängerstabilisierungseinrichtung ist die Impulserfassungseinrichtung zudem als elektrischer Generator ausgebildet. Die Impulserfassungseinrichtung bildet in dieser vorteilhaften Ausführungsform der erfindungsgemäßen Anhängerstabilisierungseinrichtung einen elektrischen Generator zur Erzeugung elektrischer Energie aus. Dabei kann die Impulserfassungseinrichtung beispielsweise mindestens eine Spule umfassen, die derart angeordnet ist, dass unter Belassung eines einen Spalt bildenden Abstands nahe zu einer Umlaufbahn der Permanentmagnete diese an der Spule vorbeigeführt werden und so aufgrund der Bewegung der Permanentmagnete eine elektrische Spannung induziert wird. Erfindungsgemäß können die einzelnen Spannungsimpulse dieses Generators als Polrad für die Anhängerstabilisierungseinrichtung genutzt werden. Der Spannungsrippel wird als Drehimpuls zur Erfassung der Drehzahl des Anhängerrads genutzt.

Die Doppelfunktion der Impulserfassungseinrichtung als Bestandteil einer Drehzahlerfassungseinrichtung und zur Ermittlung einer entsprechenden Drehzahl von Anhängerrädern wie auch die Ausgestaltung als elektrischer Generator zur Energieerzeugung bringt eine Vielzahl von Vorteilen mit sich. So besteht bisher das Problem, dass Zugfahrzeuge, insbesondere Personenkraftwagen, mit der Abgaseinstufung "Euro 6" oder höher oft die Dauerstromversorgung über eine 13-polige Anhängersteckverbindung zum Anhängerabschalten um die Lichtmaschine beziehungsweise den Motor zu entlasten und die entsprechenden Abgasnormen einhalten zu können. Sobald die Stromversorgung zum Anhänger abgeschaltet wird, sind alle Systeme im Anhänger stromlos und können nicht arbeiten. Dies betrifft insbesondere auch die bekannten Anhänger-Stabilisierungssysteme.

Vorteilhafterweise wird dieses zusätzliche Problem bei der Ausgestaltung der Impulserfassungseinrichtung als elektrischer Generator gelöst. Die Energieversorgung der Anhängerstabilisierungseinrichtung kann nämlich über die durch die Impulserfassungseinrichtung erzeugte Energie betrieben werden. Zudem besteht die Möglichkeit, dass die Anhängerstabilisierungseinrichtung mindestens einen Energiespeicher zur Speicherung und Abgabe der mittels der Permanentmagnete in Verbindung mit der mindestens einen Spule erzeugten Energie umfasst. Bei dem Energiespeicher kann es sich beispielsweise um einen Akkumulator oder einen Kondensator handeln. Auch andere Arten von Energiespeichereinrichtungen sind denkbar. Der Energiespeicher kann dann zur Energieversorgung der Anhängerstabilisierungseinrichtung und/oder der Steuereinrichtung und/oder des Bremsaktuators und/oder von weiteren elektrischen Verbrauchern des Anhängers ausgebildet sein. Es besteht aber auch die Möglichkeit, dass der Energiespeicher zudem mindestens ein Anschlusselement umfasst, welches mit einer zum Bereitstellen von Energie ausgebildeten Energiequelle eines Zugfahrzeuges zum Bewegen des Anhängers verbindbar ist, sodass der Energiespeicher über das Anschlusselement mit von der Energiequelle bereitgestellter Energie versorgbar und aufladbar ist.

Durch all diese Maßnahmen ist gewährleistet, dass die erfindungsgemäße Anhängerstabilisierungseinrichtung sicher auch in dem Fall betrieben werden kann falls die Stromversorgung vom Zugfahrzeug zum Anhänger abgeschaltet wird. Dies gilt natürlich auch für alle weiteren elektrischen Systeme, die mit dem Energiespeicher der Anhängerstabilisierungseinrichtung oder der als elektrischer Generator wirkenden Impulserfassungseinrichtung elektrisch verbunden sind und entsprechend mit Energie versorgt werden.

Des Weiteren besteht die Möglichkeit, dass über die Steuereinrichtung der Anhängerstabilisierungseinrichtung oder auch eine separate Steuereinrichtung, die ebenfalls mit dem Energiespeicher verbunden ist, eine Priorisierung der mit dem Energiespeicher verbundenen elektrischen Verbrauchern des Anhängers erfolgt. So besteht die Möglichkeit, dass zunächst die durch den Energiespeicher abgegebene Energie ausschließlich oder zu großen Teilen der Anhängerstabilisierungseinrichtung zur Verfügung gestellt wird. Beispielsweise kann hierzu eine Mindestanzahl an Stabilisierungseingriffen vorgegeben werden, die durchgeführt werden müssen, bevor andere elektrische Verbraucher des Anhängers wieder mit Energie über den Energiespeicher versorgt werden. Zudem kann festgelegt werden, dass bei einem Unterschreiten eines vorgegebenen Füllstands des Energiespeichers externe Verbraucher die nicht dem Betrieb der Anhängerstabilisierungseinrichtung dienen, nicht mehr mit Strom aus dem Energiespeicher versorgt werden.

Des Weiteren sind die Permanentmagnete abwechselnd mit unterschiedlicher Polarität angeordnet und bilden das genannte Polrad aus. Das so ausgebildete Polrad wird - wie bereits dargelegt - als Drehzahlgeber verwendet und entsprechend abgetastet. Erfindungsgemäß sind die Permanentmagnete an einem rotierenden Element einer Anhängerbremse und/oder einer Felge des Anhängerrads und/oder an mindestens einem Träger angeordnet. Entscheidend bei der Anordnung der Permanentmagnete ist, dass die Bewegung der Permanentmagnete die Drehung der Anhängerräder widerspiegelt. Dabei können die Permanentmagnete beispielsweise außenseitig an einer Bremsnabe oder einer Bremstrommel der Bremsnabe angeordnet sein. Auch können die Permanentmagnete an einer Felge angeordnet werden. Auch die Anordnung der Permanentmagnete an einem separat ausgebildeten Träger, der zwischen der Bremsnabe und der Felge des Anhängerrads angeordnet ist, ist denkbar. Des Weiteren können die Permanentmagnete an einer Scheibenbremse, insbesondere an einem Träger für die Bremsscheiben, angeordnet sein. Zudem kann eine Vielzahl von Magneten vorgesehen sein, die in äquidistanten Abständen zueinander angeordnet sind und in ihrer Anordnung das genannte Polrad ausbilden. Bei einer Anordnung der Permanentmagnete an der Bremstrommel können diese außenumfangsseitig, das heißt zur Drehachse radial beabstandet an der Bremstrommel angebracht sein. Sind die Permanentmagnete an dem separat ausgebildeten Träger angeordnet, bilden sie ebenfalls ein Polrad mit einer ringförmigen Anordnung der Magnete aus. Das erfindungsgemäß gebildete Polrad kann zudem an einer oder allen Achsen des Anhängers montiert sein und ist direkt oder indirekt über den Energiespeicher mit der elektromechanischen Anhängerstabilisierungseinrichtung verbunden.

In weiteren vorteilhaften Ausgestaltungen der erfindungsgemäßen Anhängerstabilisierungseinrichtung ist die Spule der Impulserfassungseinrichtung direkt oder über einen Spulenhalter an einem Chassis des Anhängers, einer Achskonstruktion des Anhängers, einem Schwinghebel eines Anhängerrads oder einem Bremsträgerblech montiert. Entscheidend bei der Anordnung mit der Spule ist, dass die Permanentmagnete mit einem entsprechenden Abstand daran vorbeigeführt werden können und so eine elektrische Spannung induziert wird. Die Spule kann dabei ortsfest oder auch verschiebbar montiert werden. Zudem kann die Möglichkeit bestehen, den Abstand zwischen Spule und Permanentmagneten einstellbar, das heißt regulierbar auszubilden. Des Weiteren besteht die Möglichkeit, dass die Impulserfassungseinrichtung mindestens zwei Spulen umfasst, wobei diese phasenversetzt zueinander angeordnet sind. Bei einer derartigen Ausgestaltung besteht vorteilhafter Weise die Möglichkeit, auch die Drehrichtung des Anhängerrads zu bestimmen.

Des Weiteren besteht die Möglichkeit, dass die erfindungsgemäße Anhängerstabilisierungseinrichtung mindestens einen Beschleunigungssensor und/oder mindestens einen Gierratensensor umfasst, wobei der Beschleunigungssensor und/oder der Gierratensensor mit der Steuereinrichtung verbunden sind. Über die mittels des Beschleunigungssensors und/oder Gierratensensors ermittelten Beschleunigungs- und/oder Neigungsdaten kann zudem ein Erreichen einer Blockiergrenze der Anhängerräder mitüberwacht werden.

In weiteren vorteilhaften Ausgestaltungen der erfindungsgemäßen Anhängerstabilisierungseinrichtung kann diese mindestens eine Anzeigevorrichtung zur Anzeige und Darstellung des Ladezustands des Energiespeichers umfassen. Beispielsweise kann an einer Anhängerdeichsel des Anhängers eine 2-farbige LED oder ein Textdisplay angeordnet sein, auf dem der Nutzer beim Ankuppeln des Anhängers an das Zugfahrzeug über den Ladezustand des Energiespeichers und/oder eines Ergebnisses eines möglichen Selbsttests des Energiespeichers und/oder die allgemeine Betriebsbereitschaft des Energiespeichers und/oder der Anhängerstabilisierungseinrichtung informiert wird. Des Weiteren besteht die Möglichkeit, dass die Anhängerstabilisierungseinrichtung mindestens ein Funksystem zur drahtlosen Übertragung von Statusdaten, insbesondere Ladezustandsdaten des Energiespeichers, an eine Anzeigevorrichtung umfasst. Dabei kann beispielsweise über Bluetooth die entsprechenden Statusdaten und/oder auch Warnungen bei niedrigem Fühlstand des Energiespeichers an eine entsprechende Anzeigeeinrichtung übertragen werden. Bei der Anzeigeeinrichtung kann es sich dabei um ein im Zugfahrzeug oder dem Anhänger angeordnetes Display, ein Display eines Mobiltelefons, eines Laptops, eines Tablets und vergleichbaren Vorrichtungen handeln. Vorteilhafterweise ist es daher dem Fahrer des Nutzfahrzeugs jederzeit möglich, über den beispielsweise Ladezustand des Energiespeichers und insbesondere über mögliche kritische Zustände des Ladezustands des Energiespeichers informiert zu werden.

In weiteren vorteilhaften Ausgestaltungen der erfindungsgemäßen Anhängerstabilisierungseinrichtung ist der Träger der Permanentmagnete derart ausgestaltet, dass er über eine Außenfläche des rotierenden Elements der Anhängerbremse, beispielweise der Bremsnabe, stülpbar und daran befestigbar ist. Dabei kann der Träger mindestens eine Öffnung zur Luftkühlung des mit dem Träger verbundenen rotierenden Elements der Anhängerbremse, beispielsweise der Bremsnabe, aufweisen. Durch einen derartigen Träger ist erfindungsgemäß gewährleistet, dass Anhänger auch nachträglich mit der erfindungsgemäßen Anhängerstabilisierungseinrichtung ausgerüstet werden können. Es bedarf keiner funktionellen und technischen Eingriffe in bereits bestehende Systeme. Zudem ist gewährleistet, dass die Funktionalität des rotierenden Elements der Anhängerbremse, beispielsweise der Bremsnabe, nicht beeinträchtigt wird. Die Öffnungen in dem Träger sorgen für eine ausreichende Luftkühlung des rotierenden Elements wie zum Beispiel der Bremsnabe. Die Ausgestaltung des Trägers kann eigenständige erfinderische Merkmale aufweisen, die einen separaten erfinderischen Aspekt darlegen.

Ein zweiter Aspekt der vorliegenden Erfindung betrifft ein Verfahren zur Stabilisierung und Regulierung des Fahrzustands eines Anhängers, insbesondere eines Wohnwagens, eines Caravans, eines Bootanhängers, eines Verkaufswagens, eines Transportanhängers oder eines Autotransportanhängers. Das Verfahren umfasst dabei zumindest folgende Schritte: Ermittlung der Drehzahl von mindestens einem Anhängerrad des Anhängers mittels einer Drehzahlerfassungseinrichtung, wobei die Drehzahlerfassungseinrichtung mindestens zwei Permanentmagnete als Impulsgeber einer Impulserfassungseinrichtung aufweist und die Permanentmagnete an einem rotierenden Element einer Anhängerbremse und/oder einer Felge des Anhängerrads und/oder an mindestens einem Träger angeordnet sind, wobei der Träger zwischen dem rotierenden Element der Anhängerbremse und der Felge des Anhängerrads angeordnet ist. Zudem erfolgt die Steuerung und Regelung der Drehzahl des mindestens einen Anhängerrads mittels einer mit der Impulserfassungsvorrichtung verbundenen elektronischen Steuereinrichtung zur Steuerung von wenigstens einem Bremsaktuator, wobei der Bremsaktuator zur Regulierung der Drehzahl des Anhängerrads mittels einer auf das mindestens eine Anhängerrad wirkenden Bremseinrichtung ausgebildet ist. Die Steuereinrichtung steuert den Bremsaktuator dabei in Abhängigkeit der erfassten Drehzahlen des mindestens einen Anhängerrads.

Durch das erfindungsgemäße Verfahren lässt sich der Fahrzustand eines Anhängers sicher und eindeutig erkennen und identifizieren. Zudem gewährleistet das Verfahren ein besonderes Sichern im Betrieb des Anhängers, da dieses ausschließlich auf den aktuellen Drehzahlmessungen der Anhängerräder beziehungsweise des Anhängerrades aufbaut. Andere Faktoren, die das Schlingerverhalten des Anhängers beeinflussen können, wie zum Beispiel die Differenz zwischen Leergewicht und zulässigem Gesamtgewicht des Anhängers, Reibwerte zwischen dem Anhängerrad und der Fahrbahn müssen nicht notwendigerweise erfasst werden, da sich dies in den gemessenen Drehzahlen widerspiegelt, über die Regelung der Drehzahl des Anhängerrades, das heißt ein gesteuertes Abbremsen des Anhängerrades wird einem instabilen Fahrzustand des Anhängers, wie zum Beispiel bei Schlingerbewegungen, entgegengearbeitet.

Insbesondere kann die Steuereinrichtung den Bremsaktuator derart steuern, dass ein Blockieren der Anhängerräder während der Steuerung und Regelung der Drehzahl des mindestens einen Anhängerrads vermieden wird. Durch die Vermeidung von blockierenden Rädern durch die sichere Erfassung der Drehzahl der oder des Anhängerrades kann der Stabilisierungseingriff gezielt bis an eine Kraftschlussgrenze der Anhängerräder betrieben werden. Auch hier kann auf zusätzliche Daten und Annahmen wie z.B. dem Kraftschlussbeiwert Reifen-Straße oder aktuellen Radaufstandskraftwerten verzichtet werden. Bei erkannter Blockierneigung regelt das erfindungsgemäße Verfahren die Drehzahl der Räder nach.

Des Weiteren besteht die Möglichkeit über die gemessene Drehzahl auch die aktuell gefahrene Geschwindigkeit des Anhängers abzubilden. Die gemessene Geschwindigkeit kann dabei auch mit der gemessenen Schlingerneigung des Anhängers multipliziert und mit einem vorgegebenen Grenzwert verglichen werden. Übersteigt dieses Produkt den Grenzwert, so wird ebenfalls ein Stabilisierungseingriff über die Steuereinrichtung eingeleitet. Die Bremskraft kann wiederum bis zur Erkennung einer Blockierneigung an einem oder mehreren Anhängerrädern gesteigert werden. Neben der Blockierneigung kann auch ein sogenannter Gespannverzögerungswert als Grenzwert für das Ende des Stabilisierungseingriffes herangezogen werden. Alternativ kann die Stärke des Stabilisierungseingriffes auch stärker ausgeführt werden, in diesem Fall müssten jedoch Bremslichter des Anhängers aktiviert werden.

Des Weiteren ermöglicht das erfindungsgemäße Verfahren vorteilhafterweise auch Auswertungs- und Regelungsstrategien, die Extremfälle von Fahrzuständen des Anhängers vermeiden beziehungsweise zu regulieren hilft. So besteht die Möglichkeit, dass bei schlingernden Anhängern beispielsweise das innere Rad vom Boden abhebt und damit bereits bei geringster Bremsenbetätigung blockiert. Die Steuereinrichtung kann erfindungsgemäß derart ausgestaltet sein, dass derartige Blockierungen ausgefiltert werden, sodass in der Regelung nur das äußere, höher belastete Anhängerrad die Regelung bestimmt.

Des Weiteren besteht die Möglichkeit, dass die Steuereinrichtung derart ausgestaltet ist, dass bei der Stabilisierungsregelung die aktuellen Schlingerbewegungen des Anhängers ebenfalls berücksichtigt werden. Dabei kann beispielsweise die Bremskraft von einem Nulldurchgang, der durch die exakte Lage der Längsachse des Anhängers definiert wird, bis zum Scheitelpunkt der Schlingerbewegung gesteigert und beim Rückschwingen reduziert werden. Damit kann verhindert werden, dass der schlingernde Anhänger beim Rückschwingen zur Nulllage einen zusätzlichen Bewegungsimpuls erfährt.

Die im vorhergehenden genannten Ausgestaltungsmöglichkeiten des erfindungsgemäßen Verfahrens, insbesondere die Ausgestaltung der Steuereinrichtung beziehungsweise der einzelnen Funktionen der Steuereinrichtung, können eigenständige erfinderische Merkmale aufweisen, die gegebenenfalls auch ohne eine Drehzahlerfassung der Anhängerräder einen erfinderischen Aspekt darlegen.

In weiteren vorteilhaften Ausgestaltungen des erfindungsgemäßen Verfahrens wirken die Permanentmagnete mit mindestens einem Magnetfeldsensor an dem die Permanentmagnete vorbeigeführt werden und/oder mit mindestens einer Spule zur Induzierung einer elektrischen Spannung zusammen. Das Zusammenwirken der Permanentmagnete mit der mindestens einen Spule führt zur Ausgestaltung der Impulserfassungseinrichtung als zusätzlichen elektrischen Generator. Die mit diesem elektrischen Generator erzeugte Energie kann dann in mindestens einem Energiespeicher abgespeichert werden. Die so abgespeicherte Energie kann dabei zur Energieversorgung der Anhängerstabilisierungseinrichtung und/oder der Steuereinrichtung und/oder des Bremsaktuators und/oder von elektrischen Verbrauchern des Anhängers verwendet werden.

Weitere Merkmale und deren Vorteile ergeben sich aus der vorstehenden Beschreibung des ersten Erfindungsaspekts, wobei vorteilhafte Ausgestaltungen des ersten Erfindungsaspekts als vorteilhafte Ausgestaltungen des zweiten Erfindungsaspekts anzusehen sind. Umgekehrt sind vorteilhafte Ausgestaltungen des zweiten Erfindungsaspekts als vorteilhafte Ausgestaltungen des ersten Erfindungsaspekts anzusehen.

Ein dritter Aspekt der Erfindung betrifft ein Computerprogramm, umfassend Befehle, die bewirken, dass die Anhängerstabilisierungseinrichtung gemäß dem ersten Erfindungsaspekt die Verfahrensschritte gemäß dem zweiten Erfindungsaspekt ausführt.

Ein vierter Aspekt der Erfindung betrifft einen Anhänger, insbesondere einen Wohnwagen, Caravan, Bootsanhänger, Verkaufswagen, Transportanhänger oder Autotransportanhänger, mit mindestens einer Anhängerstabilisierungseinrichtung gemäß dem ersten Erfindungsaspekt.

Weitere Merkmale und deren Vorteile des dritten oder vierten Aspekts der Erfindung sind den Beschreibungen des ersten und zweiten Erfindungsaspekts zu entnehmen, wobei vorteilhafte Ausgestaltungen jedes Erfindungsaspekts als vorteilhafte Ausgestaltungen des jeweils anderen Erfindungsaspekts anzusehen sind.

Weitere Vorteile, Merkmale und Einzelheiten der Erfindung ergeben sich aus der nachfolgenden Beschreibung bevorzugter Ausführungsbeispiele sowie anhand der Zeichnung Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Figuren zeigen in:
- Fig. 1: eine schematische Perspektivansicht eines Anhängers mit einer erfindungsgemäßen Anhängerstabilisierungseinrichtung gemäß einer ersten Ausführungsform;
- Fig. 2: eine schematische Detailansicht der erfindungsgemäßen Anhängerstabilisierungseinrichtung gemäß Figur 1;
- Fig. 3: eine weitere schematische Detailansicht der erfindungsgemäßen Anhängerstabilisierungseinrichtung gemäß Figur 1;
- Fig. 4: eine schematische Perspektivansicht eines Trägers der erfindungsgemäßen Anhängerstabilisierungseinrichtung gemäß den Figuren 1 bis 3;
- Fig. 5: eine schematische Detailansicht einer erfindungsgemäßen Anhängerstabilisierungseinrichtung gemäß einer zweiten Ausführungsform;
- Fig. 6: eine schematische Detailansicht einer erfindungsgemäßen Anhängerstabilisierungseinrichtung gemäß einer dritten Ausführungsform; und
- Fig. 7: eine schematische Perspektivansicht eines Trägers der erfindungsgemäßen Anhängerstabilisierungseinrichtung gemäß Figur 6.

In den Figuren sind gleiche oder funktionsgleiche Elemente mit gleichen Bezugszeichen versehen.

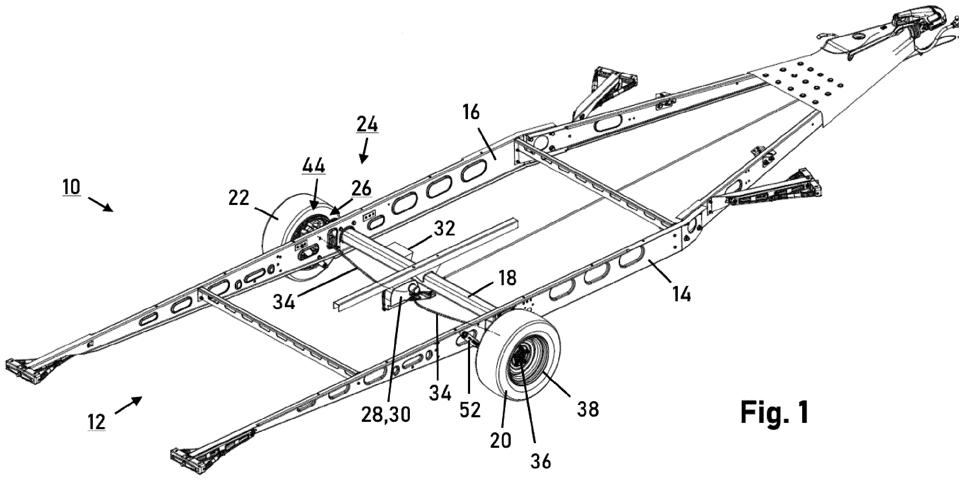

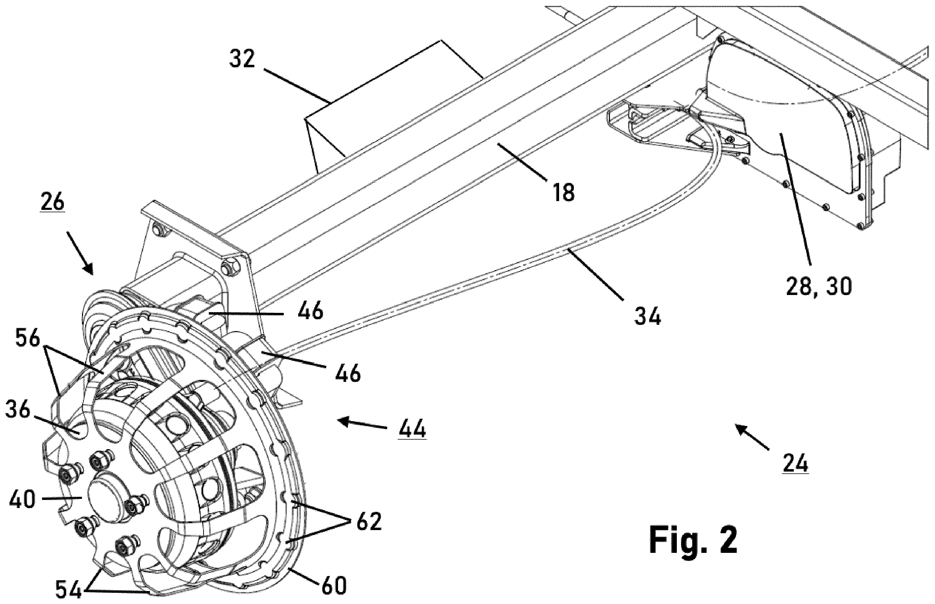

Fig. 1 zeigt eine schematische Perspektivansicht eines Anhängers mit einer Anhängerstabilisierungseinrichtung 24 gemäß einer ersten Ausführungsform. Der Anhänger umfasst ein Chassis 10 mit einem Rahmen oder einem Gestell 12, der beziehungsweise das unter anderem zwei in Längsrichtung des Chassis 10 verlaufende Längsträger 14, 16 aufweist. Es ist ferner eine Achse 18 vorgesehen, die jeweils endseitig mit einem Anhängerrad 20, 22 zusammenwirkt. An dem Chassis 10 ist zudem ein Bremsaktuator 28 angeordnet, der zur Betätigung entsprechender Bremseinrichtungen 58 an den einem rotierenden Elementen einer Anhängerbremse, hier den Bremsnaben 36 der Anhängerräder 20, 22 ausgebildet ist. Zur Betätigung der Bremseinrichtungen 58 der Anhängerräder 20, 22 (vergleiche Fig. 2) sind die Bremseinrichtungen 58 jeweils über einen Seilzug 34 mit dem Bremsaktuator 28 verbunden.

Des Weiteren erkennt man, dass die endseitig an der Achse 18 vorgesehenen Räder 20, 22 über jeweils in an sich bekannter Weise über eine entsprechende Felge 38 verfügen, die im betriebsfertigen Zustand mit jeweils einem Reifen ausgerüstet ist.

Die Anhängerstabilisierungseinrichtung 24 weist zudem eine Drehzahlerfassungseinrichtung 26 zur Ermittlung der Drehzahl des jeweiligen Anhängerrads 20, 22 auf. Die Drehzahlerfassungseinrichtung 26 ist zudem mit einer elektronischen Steuereinrichtung 30 zur Steuerung des Bremsaktuators 28 und damit zur Steuerung und Regulierung der Drehzahl der Anhängerräder 20, 22 mittels der auf die Anhängerräder 20, 22 wirkenden Bremseinrichtung 58 auf. Die Steuereinrichtung 30 steuert dabei den Bremsaktuator 28 in Abhängigkeit der erfassten Drehzahlen der Anhängerräder 20, 22. An der Achse 18 ist zudem ein Energiespeicher 32 angeordnet, insbesondere fest mit der Achse 18 verbunden. In der Fig. 1 sowie den folgenden Figuren sind einzelne elektrische Leitungen, die die verschiedenen Elemente der Anhängerstabilisierungseinrichtung 24 miteinander verbinden nicht explizit dargestellt.

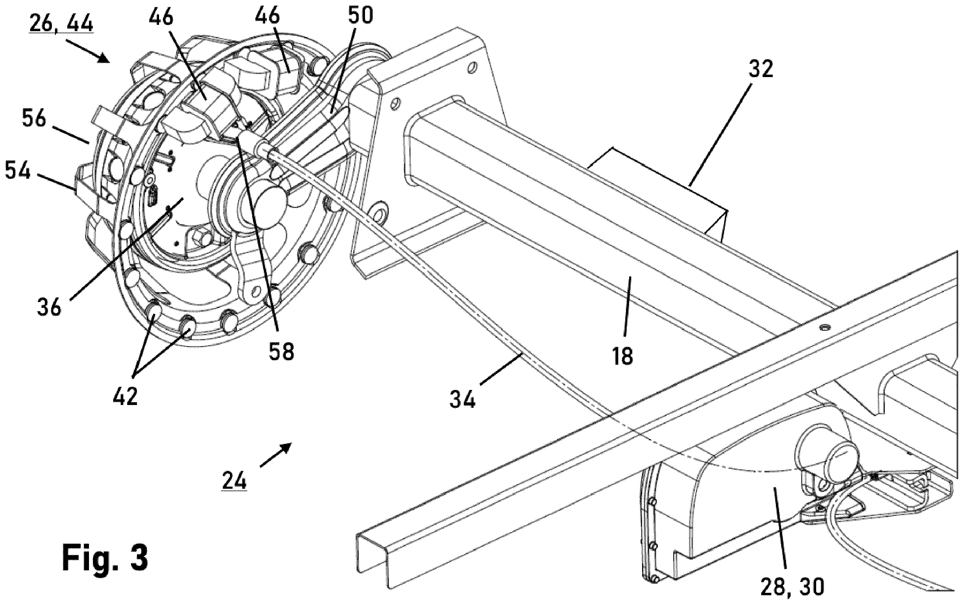

Die Fig. 2 und 3 zeigen jeweils schematische Detailansichten der Anhängerstabilisierungsvorrichtung 24 gemäß Fig. 1. In der Zusammenschau der Figuren 2 und 3 ist deutlich erkennbar, dass die Drehzahlerfassungseinrichtung 26 eine Vielzahl kreisförmig um die Bremsnabe 36 angeordnete Permanentmagnete 42 aufweist. Die Permanentmagnete 42 dienen dabei als Impulsgeber einer Impulserfassungseinrichtung 44 und sind in dem dargestellten Ausführungsbeispiel an einem Träger 40 angeordnet. Der Träger 40 bildet dabei mit einem abnehmbaren Außenring 60 entsprechende Öffnungen 56 zur Aufnahme und Befestigung der Permanentmagnete 42 auf. Man erkennt, dass der Träger 40 insgesamt topf- oder schüsselartig ausgebildet ist, derart, dass er über eine Außenfläche der Bremsnabe 36 stülpbar und daran befestigbar ist. Die Seitenwand des Trägers 40 weist dabei Streben 54 auf, die Öffnungen 56 umgeben. Die Öffnungen 56 dienen zur Luftkühlung der darunter angeordneten Bremsnabe 36.

Des Weiteren erkennt man, dass die Bremsnabe 36 unter Zwischenordnung eines Schwinghebels 50 an der Achse 18 endseitig angeordnet ist. Dies ist exemplarisch in den Fig. 2 und 3 anhand des in Fahrtrichtung linken Anhängerrads 22 dargestellt. Des Weiteren erkennt man, dass die Bremseinrichtung 58 über den Seilzug 34 mit dem Bremsaktuator 28 verbunden ist. Der Bremsaktuator 28 wird mittels der Steuereinrichtung 30 geregelt beziehungsweise gesteuert.

Des Weiteren wird deutlich, dass bei dem dargestellten Ausführungsbeispiel der Träger 40 zwischen der jeweiligen Bremsnabe 36 und der jeweiligen Felge 38 (nicht dargestellt) der Anhängerräder 20, 22 angeordnet ist.

Aus der Zusammenschau der Figuren 2 und 3 wird zudem deutlich, dass die Impulserfassungseinrichtung 44 zwei Spulen 46 umfasst, die derart angeordnet sind, dass unter Belassung eines einen Spalt bildenden Abstands nahe zu einer Umlaufbahn der Permanentmagnete 42 diese an den Spulen 46 vorbeigeführt werden. Aufgrund der Bewegung der Permanentmagnete 42 wird hier eine elektrische Spannung induziert. Die Spulen 46 können als sogenannte Luftspulen ausgebildet sein oder aus sogenannten Transformatorkernblechen bestehen. Auch andere Spulentypen sind denkbar. In dem dargestellten Ausführungsbeispiel sind zwei Spulen 46 angeordnet, die phasenversetzt zueinander angeordnet sind. Damit besteht die Möglichkeit, auch die Drehrichtung der Anhängerräder 20, 22 zu erfassen. Die Permanentmagneten 42 sind in üblicher Weise mit unterschiedlicher Polarität angeordnet. Die mittels der Permanentmagnete 42 in Verbindung mit den Spulen 46 erzeugte Energie wird in dem Energiespeicher 32 gespeichert. Hierzu sind die Spulen 46 in üblicher Weise mit dem Energiespeicher 32 über elektrische Leitungen (nicht dargestellt) verbunden. Der Energiespeicher 32 dient dabei zur Energieversorgung der Anhängerstabilisierungseinrichtung 24 insgesamt oder einzelner Elemente der Anhängerstabilisierungseinrichtung 24, wie beispielsweise der Steuereinrichtung 30 oder des Bremsaktuators 28. Es besteht zudem die Möglichkeit, dass der Energiespeicher 32 zur Energieversorgung von elektrischen Verbrauchern des Anhängers verwendet wird. Des Weiteren besteht die Möglichkeit, dass der Energiespeicher 32 mindestens ein Anschlusselement (nicht dargestellt) umfasst, welches mit einer zum Bereitstellen von Energie ausgebildeten Energiequelle eines Zugfahrzeugs zum Bewegen des Anhängers verbindbar ist. Der Energiespeicher 32 kann in diesem Fall über das Anschlusselement mit von der Energiequelle bereitgestellter Energie versorg- und aufladbar sein. Bei einer derartig anliegenden Versorgungsspannung vom Zugfahrzeug wird diese bevorzugt für das Aufladen des Energiespeichers 32 benutzt. Eine Schutzschaltung (nicht dargestellt) verhindert dabei den Rückfluss durch die von der Impulserfassungseinrichtung 44 beziehungsweise den Permanentmagneten 42 in Verbindung mit den Spulen 46 gewonnen elektrischen Energie zum Zugfahrzeug. Durch die mittels der Impulserfassungseinrichtung 44 erzeugte Energie ist die Anhängerstabilisierungseinrichtung 24 jedoch unabhängig von der Stromversorgung des Zugfahrzeugs betätigbar. Der Energiespeicher 32 kann zudem lösbar an der Achse 18 befestigt werden, beispielsweise über Bügelschrauben oder über eine an der Achse 18 angebrachte Halterung. In diesem Fall kann der Energiespeicher 32 auch problemlos gewechselt werden.

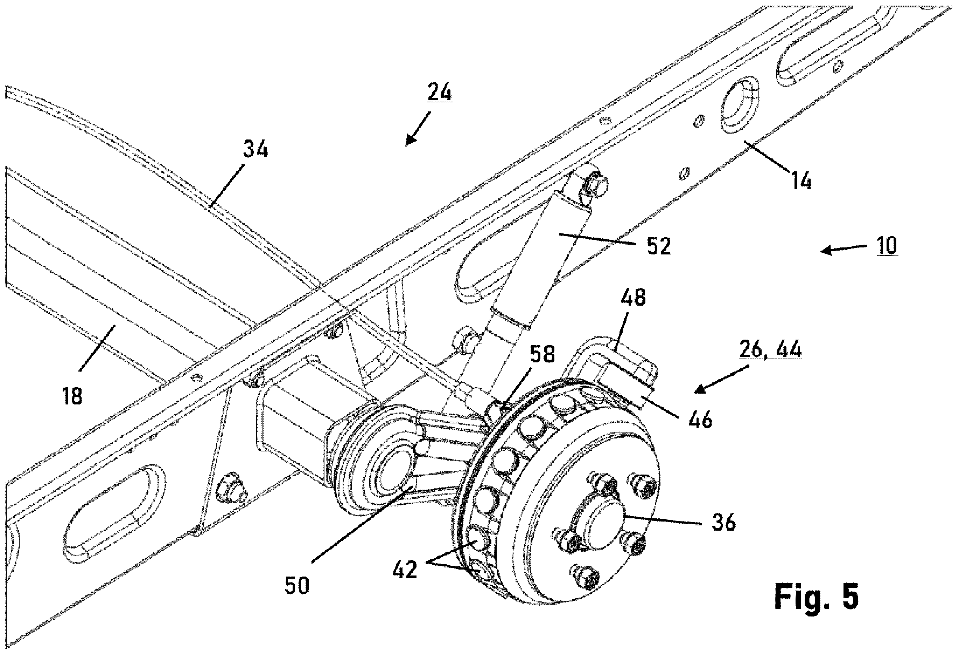

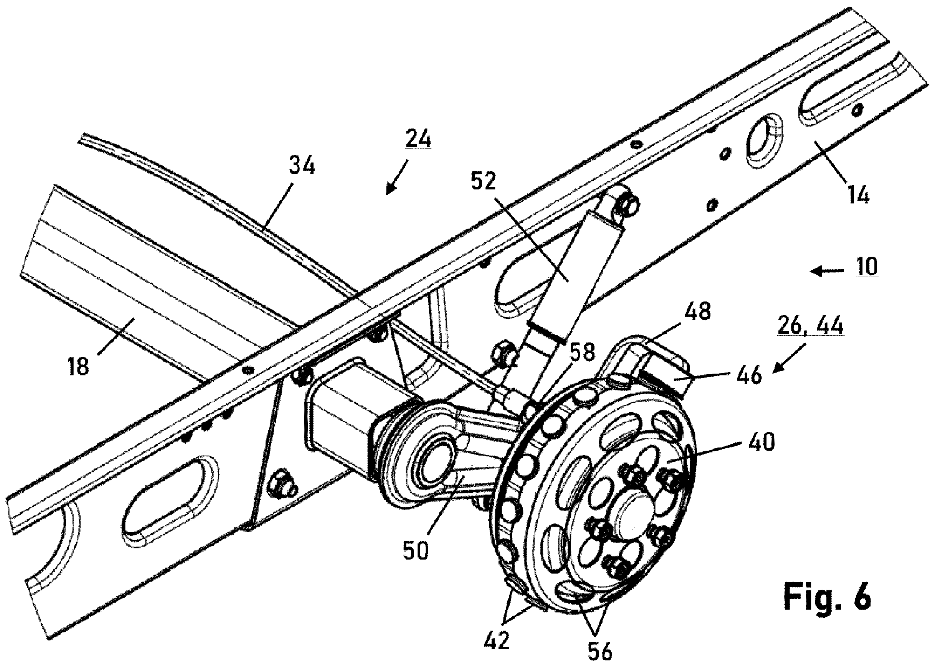

Die Spulen 46 können direkt oder über einen Spulenhalter 48 (vergleiche Fig. 5 und 6) an dem Chassis 10, der Achskonstruktion des Anhängers, dem Schwinghebel 50 oder einem Bremsträgerblech montiert sein.

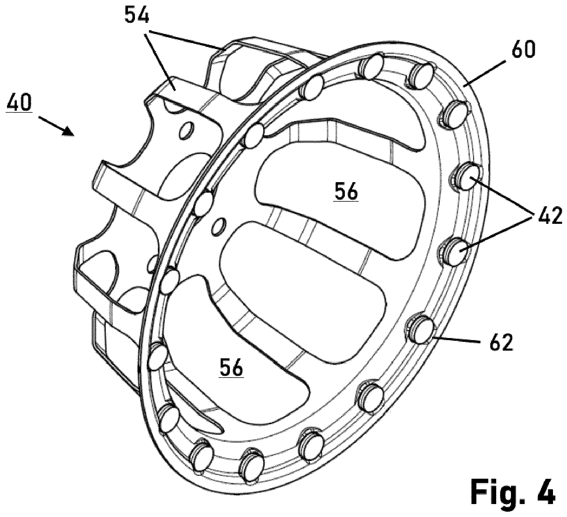

Fig. 4 zeigt eine schematische Perspektivansicht des Trägers 40 der Anhängerstabilisierungseinrichtung 24 gemäß den Fig. 1 bis 3. Man erkennt die insgesamt topf- oder schüsselartige Ausgestaltung des Trägers 40. Der Innenumfang des Trägers 40 ist dabei derart dimensioniert, dass er über eine Bremsnabe 36 des Anhängerrads 20, 22 stülpbar ist. Zwischen den Öffnungen 56 sind die Streben 54 zur Ausbildung der seitlichen Wände des Trägers 40 ausgebildet. Man erkennt, dass die Permanentmagnete 42 in wechselnder Ausrichtung gleichmäßig und kreisförmig an dem durch den Außenring 60 abgeschlossenen Bereich des Außenrands des Trägers 40 angeordnet sind. Zur Aufnahme der Permanentmagnete 42 sind die Öffnungen 56 ausgebildet.

Fig. 5 zeigt eine schematische Detailansicht einer Anhängerstabilisierungsvorrichtung 24 gemäß einer zweiten Ausführungsform. Im Unterschied zu dem in den Fig. 1 bis 4 dargestellten ersten Ausführungsbeispiel sind hier die Permanentmagnete 42 am Außenumfang der Bremsnabe 36 angeordnet. Zudem weist die Impulserfassungseinrichtung 44 nur eine Spule 46 auf, die über einen Spulenhalter 48 an dem Schwinghebel 50 des Anhängerrads befestigt ist. Über den Seilzug 34 ist die Bremseinrichtung 58 wiederum mit einem in dieser Figur nicht dargestellten Bremsaktuator 28 verbunden. Zusätzlich ist in Fig. 5 die Anordnung eines Stoßdämpfers 52 zwischen dem Längsträger 14 und dem Schwinghebel 50 erkennbar.

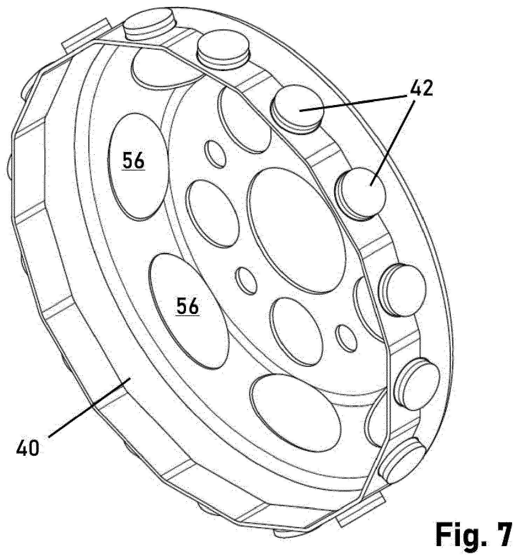

Fig. 6 zeigt eine schematische Detailansicht einer Anhängerstabilisierungsrichtung gemäß einer dritten Ausführungsform. In Zusammenschau mit der Fig. 7, welche eine schematische Perspektivansicht eines Trägers 40 der Anhängerstabilisierungsvorrichtung 24 gemäß Fig. 6 darstellt, wird deutlich, dass die Permanentmagnete 42 wiederum an einem separat ausgebildeten Träger 40 angeordnet sind. Der Träger 40 ist wiederum zwischen der Bremsnabe 36 und der nicht dargestellten Felge des Anhängerrades an der Bremsnabe 36 befestigt. Die Permanentmagnete 42 sind hier an einem Außenring des ebenfalls schüssel- oder topfartig ausgebildeten Trägers 40 äquidistant angeordnet. Wie auch in den zuvor beschriebenen Ausführungsbeispielen sind die Permanentmagnete 42 abwechselnd mit unterschiedlicher Polarität versehen. Zur Kühlung der Bremsnabe 36 weist der Träger 40 gemäß der hier beschriebenen Ausführungsform ebenfalls Öffnungen 56 zur Luftkühlung auf. Die Impulserfassungseinrichtung 44 umfasst auch in diesem Ausführungsbeispiel eine Spule 46, die an einem Spulenhalter 48 befestigt ist. Der Spulenhalter 48 ist wiederum an dem Schwinghebel 50 angeordnet. Die Bremseinrichtung 58 wird auch in diesem Ausführungsbeispiel mittels des Seilzugs 34 betätigt.

### Bezugszeichenliste

- 10: Chassis
- 12: Rahmen
- 14: Längsträger
- 16: Längsträger
- 18: Achse
- 20: Anhängerrad
- 22: Anhängerrad
- 24: Anhängerstabilisierungseinrichtung
- 26: Drehzahlerfassungseinrichtung
- 28: Bremsaktuator
- 30: Steuereinrichtung
- 32: Energiespeicher
- 34: Seilzüge
- 36: Bremsnabe
- 38: Felge
- 40: Träger
- 42: Permanentmagnet
- 44: Impulserfassungseinrichtung
- 46: Spule
- 48: Spulenhalter
- 50: Schwinghebel
- 52: Stoßdämpfer
- 54: Strebe
- 56: Öffnung (Träger)
- 58: Bremseinrichtung
- 60: Außenring (Träger)
- 62: Aufnahmeöffnung

## Patentansprüche

1. Anhängerstabilisierungseinrichtung (24) für einen Anhänger, insbesondere für einen Wohnwagen, einen Caravan, einen Bootsanhänger, einen Verkaufswagen, einen Transportanhänger oder einen Autotransportanhänger, umfassend
- mindestens eine Drehzahlerfassungseinrichtung (26) zur Ermittlung der Drehzahl von mindestens einem Anhängerrad (20, 22), wobei die Drehzahlerfassungseinrichtung (26) mindestens zwei Permanentmagnete (42) als Impulsgeber einer Impulserfassungseinrichtung (44) aufweist und die Permanentmagnete (42) an einem rotierenden Element einer Anhängerbremse und/oder einer Felge (38) des Anhängerrads (20, 22) und/oder an mindestens einem Träger (40) angeordnet sind, wobei der Träger (40) zwischen dem rotierenden Element der Anhängerbremse und der Felge (38) des Anhängerrads (20, 22) angeordnet ist, und
- mindestens eine mit der Impulserfassungsvorrichtung (44) verbundene elektronische Steuereinrichtung (30) zur Steuerung von wenigstens einem Bremsaktuator (28) zur Regulierung der Drehzahl des Anhängerrads (20, 22) mittels einer auf das mindestens eine Anhängerrad (20, 22) wirkenden Bremseinrichtung (58), wobei die Steuereinrichtung (30) den Bremsaktuator (28) in Abhängigkeit der erfassten Drehzahlen des mindestens einen Anhängerrads (20, 22) steuert.

2. Anhängerstabilisierungseinrichtung (24) nach Anspruch 1,
**dadurch gekennzeichnet, dass**
die Impulserfassungseinrichtung (44) mindestens einen Magnetfeldsensor an dem die Permanentmagnete (42) vorbeigeführt werden, umfasst.

3. Anhängerstabilisierungseinrichtung (24) nach Anspruch 1 oder 2,
**dadurch gekennzeichnet, dass**
die Impulserfassungseinrichtung (44) mindestens eine Spule (46) umfasst, die derart angeordnet ist, dass unter Belassung eines einen Spalt bildendenden Abstands nahe zu einer Umlaufbahn der Permanentmagnete (42) diese an der Spule (46) vorbeigeführt werden und so aufgrund der Bewegung der Permanentmagnete (42) eine elektrische Spannung induziert wird.

4. Anhängerstabilisierungseinrichtung (24) nach Anspruch 3,
**dadurch gekennzeichnet, dass**
die Anhängerstabilisierungseinrichtung (24) mindestens einen Energiespeicher (32) zur Speicherung und Abgabe der mittels der Permanentmagnete (42) in Verbindung mit der mindestens einen Spule (46) erzeugten Energie, umfasst.

5. Anhängerstabilisierungseinrichtung (24) nach Anspruch 4,
**dadurch gekennzeichnet, dass**
der Energiespeicher (32) zur Energieversorgung der Anhängerstabilisierungseinrichtung (24) und/oder der Steuereinrichtung (30) und/oder des Bremsaktuators (28) und/oder von elektrischen Verbrauchern des Anhängers ausgebildet ist.

6. Anhängerstabilisierungseinrichtung (24) nach einem der Ansprüche 4 oder 5,
**dadurch gekennzeichnet, dass**
der Energiespeicher (32) mindestens ein Anschlusselement umfasst, welches mit einer zum Bereitstellen von Energie ausgebildeten Energiequelle eines Zugfahrzeugs zum Bewegen des Anhängers verbindbar ist, sodass der Energiespeicher (32) über das Anschlusselement mit von der Energiequelle bereitgestellter Energie versorg- und aufladbar ist.

7. Anhängerstabilisierungseinrichtung (24) nach einem der Ansprüche 3 bis 6,
**dadurch gekennzeichnet, dass**
die Spule (46) direkt oder über einen Spulenhalter (48) an einem Chassis (10) des Anhängers, einer Achskonstruktion des Anhängers, einem Schwinghebel (50) eines Anhängerrads (20, 22) oder einem Bremsträgerblech montiert ist.

8. Anhängerstabilisierungseinrichtung (24) nach einem der Ansprüche 3 bis 7,
**dadurch gekennzeichnet, dass**
die Impulserfassungseinrichtung (44) mindestens zwei Spulen (46) umfasst, die phasenversetzt zueinander angeordnet sind.

9. Anhängerstabilisierungseinrichtung (24) nach einem der vorhergehenden Ansprüche,
**dadurch gekennzeichnet, dass**
die Anhängerstabilisierungseinrichtung (24) mindestens einen Beschleunigungssensor und/oder Gierratensensor umfasst, wobei der Beschleunigungssensor und/oder Gierratensensor mit der Steuereinrichtung (30) verbunden ist.

10. Anhängerstabilisierungseinrichtung (24) nach einem der Ansprüche 4 bis 9,
**dadurch gekennzeichnet, dass**
die Anhängerstabilisierungseinrichtung (24) mindestens eine Anzeigevorrichtung zur Anzeige und Darstellung des Ladezustands des Energiespeichers (32) umfasst.

11. Anhängerstabilisierungseinrichtung (24) nach einem der vorhergehenden Ansprüche,
**dadurch gekennzeichnet, dass**
die Anhängerstabilisierungseinrichtung (24) mindestens ein Funksystem zur drahtlosen Übertragung von Statusdaten, insbesondere Ladezustandsdaten eines Energiespeichers (32), an eine Anzeigevorrichtung umfasst.

12. Anhängerstabilisierungseinrichtung (24) nach einem der vorhergehenden Ansprüche,
**dadurch gekennzeichnet, dass**
der Träger (40) derart ausgestaltet ist, das er über eine Außenfläche des rotierenden Elements der Anhängerbremse, insbesondere einer Bremsnabe (36), stülpbar und daran befestigbar ist.

13. Anhängerstabilisierungseinrichtung (24) nach einem der vorhergehenden Ansprüche,
**dadurch gekennzeichnet, dass**
der Träger (40) mindestens eine Öffnung (56) zur Luftkühlung des mit dem Träger (40) verbundenen Elements der Anhängerbremse, insbesondere einer Bremsnabe (36), aufweist.

14. Anhängerstabilisierungseinrichtung (24) nach einem der vorhergehenden Ansprüche,
**dadurch gekennzeichnet, dass**
die Impulserfassungseinrichtung (44) als elektrischer Generator ausgebildet ist.

15. Verfahren zur Stabilisierung und Regulierung des Fahrzustands eines Anhängers, insbesondere eines Wohnwagens, eines Caravans, eines Bootsanhängers, eines Verkaufswagens, eines Transportanhängers oder eines Autotransportanhängers, umfassend zumindest folgende Schritte:
- Ermittlung der Drehzahl von mindestens einem Anhängerrad (20, 22) des Anhängers mittels einer Drehzahlerfassungseinrichtung (26), wobei die Drehzahlerfassungseinrichtung (26) mindestens zwei Permanentmagnete (42) als Impulsgeber einer Impulserfassungseinrichtung (44) aufweist und die Permanentmagnete (42) an einem rotierenden Element einer Anhängerbremse und/oder einer Felge (38) des Anhängerrads (20, 22) und/oder an mindestens einem Träger (40) angeordnet sind, wobei der Träger (40) zwischen dem rotierenden Element der Anhängerbremse und der Felge (38) des Anhängerrads (20, 22) angeordnet ist; und
- Steuerung und Regelung der Drehzahl des mindestens einen Anhängerrads (20, 22) mittels einer mit der Impulserfassungsvorrichtung (44) verbundenen elektronischen Steuereinrichtung (30) zur Steuerung von wenigstens einem Bremsaktuator (28), wobei der Bremsaktuator (28) zur Regulierung der Drehzahl des Anhängerrads (20, 22) mittels einer auf das mindestens eine Anhängerrad (20, 22) wirkenden Bremseinrichtung (58) ausgebildet ist und wobei die Steuereinrichtung (30) den Bremsaktuator (28) in Abhängigkeit der erfassten Drehzahlen des mindestens einen Anhängerrads (20, 22) steuert.

16. Verfahren nach Anspruch 15,
**dadurch gekennzeichnet, dass**
die Impulserfassungseinrichtung (44) elektrische Energie erzeugt.

17. Verfahren nach Anspruch 15 oder 16,
**dadurch gekennzeichnet, dass**
die Permanentmagnete (42) mit mindestens einer Spule (46) zur Induzierung einer elektrischen Spannung zusammenwirken.

18. Verfahren nach einem der Ansprüche 15 bis 17,
**dadurch gekennzeichnet, dass**
die Steuereinrichtung (30) den Bremsaktuator (28) derart steuert, dass ein Blockieren der Anhängerräder (20, 22) während der Steuerung und Regelung der Drehzahl des mindestens einen Anhängerrads (20, 22) vermieden wird.

19. Verfahren nach einem der Ansprüche 15 bis 18,
**dadurch gekennzeichnet, dass**
das Verfahren den Schritt der Messung und Ermittlung der Beschleunigung des Anhängers mittels mindestens einem Beschleunigungssensor und/oder Gierratensensor umfasst.

20. Computerprogramm, umfassend Befehle, die bewirken, dass die Anhängerstabilisierungseinrichtung (24) gemäß den Ansprüchen 1 bis 14 die Verfahrensschritte nach einem der Ansprüche 15 bis 19 ausführt.

21. Anhänger, insbesondere Wohnwagen, Caravan, Bootsanhänger, Verkaufswagen, Transportanhänger oder Autotransportanhänger, mit mindestens einer Anhängerstabilisierungseinrichtung (24) nach einem der Ansprüche 1 bis 14.
